# EUROPEAN PATENT SPECIFICATION

(11) **EP 4 036 393 B1**
(45) Date of publication and mention of the grant of the patent: **02.10.2024**
(21) Application number: 22153538.8
(22) Date of filing: 26.01.2022
(51) Int. Cl.: F02D 19/06, F02D 41/00, F02D 41/24, F02D 19/08, F02D 19/02, F02M 21/02, F02D 41/18

(54) **LPG SUPPLY SYSTEM FOR ENGINES WITH POSITIVE IGNITION AND METHOD FOR ESTIMATING THE COMPOSITION OF LPG IN SAID SYSTEM**
LPG VERSORGUNGSSYSTEM FÜR MOTOREN MIT FREMDZÜNDUNG UND VERFAHREN ZUR SCHÄTZUNG DER ZUSAMMENSETZUNG DES LPG IN DIESEM SYSTEM
SYSTÈME D'ALIMENTATION EN GPL POUR MOTEURS À ALLUMAGE COMMANDÉ ET PROCÉDÉ D'ESTIMATION DE LA COMPOSITION DU GPL DANS LEDIT SYSTÈME

(30) Priority: 02.02.2021 IT 202100002087
(43) Date of publication of application: 03.08.2022
(73) Proprietor: LANDI RENZO S.p.A., 42025 Cavriago (Reggio Emilia) (IT)
(72) Inventor: AGNETTI, Mirko, 42123 REGGIO EMILIA (IT); CARBONE, Luca, 40131 BOLOGNA (IT)
(74) Representative: Dondi, Silvia

(56) References cited:
- DE-A1- 102016 209 195
- US-A1- 2003 216 883
- US-A1- 2012 060 796
- US-A1- 2016 356 234
- US-A1- 2016 356 234

## Description

The present invention relates to an LPG supply system for engines with positive ignition and a method for estimating the composition of LPG in said system.

The reference sector is that of engines with positive ignition, for example petrol engines supplied by LPG.

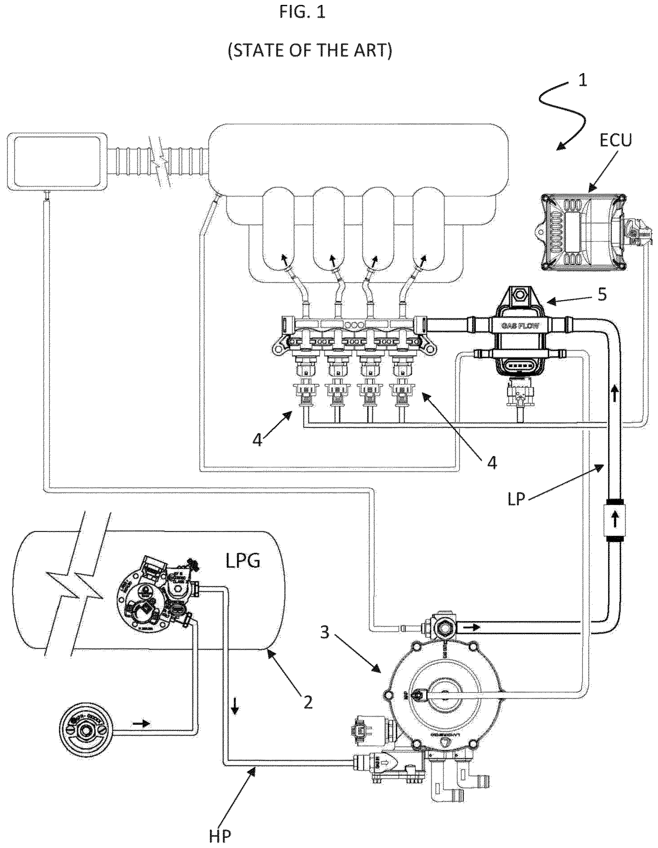

An LPG supply system of the known type, for petrol engines, is schematically illustrated in figure 1, indicated by number 1.

The system comprises a tank 2 in which the LPG is stored in a condition of balance between the liquid phase and the gaseous phase, at ambient temperature.

The tank 2 is in fluid communication with a vaporiser/pressure reducer 3 through a high pressure line HP. The vaporiser/pressure reducer 3 is configured to vaporise the LPG, thus reducing the pressure to the operating pressure.

The vaporised LPG reaches the injectors 4 through a low pressure line LP. A pressure sensor and a temperature sensor, integrated into a single block 5, are installed at the injectors 4.

The system 1 further comprises an electronic control unit, commonly indicated as ECU (Electronic Control Unit), which is configured to control the injection and monitor the signals from the sensors and from the other electromechanical/electronic components of the system.

To enable the pressure reducer 3 to reach a suitable temperature to fully vaporise the required LPG flow rate, the engine is initially started and powered by petrol for a certain time interval, until certain conditions are reached. These waiting conditions depend on the ambient temperature and the engine cooling liquid temperature.

Starting from these values, a waiting time and minimum engine temperature are calculated, beyond which the system automatically switches from petrol supply to LPG supply.

To guarantee the injection of LPG in superheated vapour phase, waiting conditions adapted to the mixture are used with more unfavourable vaporisation characteristics at low temperatures (low propane percentages).

When the waiting time is too short, such that the LPG is not completely vaporised, the system is configured to make one or more switches back in which the supply passes back from LPG to petrol again. These back switches can take place, for example, in the case of high load with non-optimal engine cooling liquid temperatures.

In the state of the art, to estimate the composition of the LPG a pressure sensor is used in the tank or in the high pressure part of the circuit (from the tank 2 to the vaporiser 3), where the LPG in the liquid and vapour state are in a balanced condition. Sometimes, there is also a temperature sensor in the same point.

However, this solution has reliability limits, connected with the fact that the additional sensors for estimating the mixture often have complex circuit connections, with potential loss points.

Lack of knowledge of the composition of the LPG affects the choices during the calibration step, to define the moment at which the supply can pass from petrol to LPG.

A first method, defined as "conservative", envisages passing to LPG supply only when there is a certainty of having superheated vapour at the outlet of the vaporiser 3 to prevent any risks of condensation in the low pressure circuit.

The disadvantages of this method are connected with the higher consumption of petrol, due to a replacement of the LPG which is often late, with a consequent increase in CO₂ emissions.

A second method instead envisages passing to LPG supply as soon as possible. However, in this case, the switch to LPG risks happening too soon, when the liquid LPG is present in the mixture injected into the engine, with consequent problems connected with driveability, reliability of components and driving safety. DE 10 2016 209195 A1 discloses determination of the proportion of butane in the LPG and control of the LPG supply to the engine depending thereon.

US 2012/060796 A1 discloses determination of the LPG composition in the fuel tank, the composition of the LPG corresponding to a proportion of propane and a proportion of butane.

US 2003/216883 A1 discloses determination of the LPG composition based on fuel pressure and fuel temperature data detected in the fuel line, determined in the fuel tank and taking into account saturation vapor pressure data in the fuel tank which are determined based on the temperature and pressure in the tank.

In this context, the technical task underpinning the present invention is to propose an LPG supply system for engines with positive ignition and a method for estimating the composition of LPG in said system, which obviate the drawbacks of the prior art cited above.

In particular, an object of the present invention is to propose an LPG supply system for engines with positive ignition and a method for estimating the composition of LPG in said system, which enable the moment of passing over to the LPG supply to be accurately established, thus optimising the consumption, reducing CO₂ emissions and increasing safety, driveability and the reliability of the components.

The technical task set and the objects specified are substantially attained by a method for estimating the composition of LPG in an LPG supply system for engines with positive ignition, said LPG supply system comprising an LPG tank, a pressure reducer, a first conduit that extends between the tank and the pressure reducer, a plurality of injectors and a second conduit that extends between the pressure reducer and the injectors.

The method proposed comprises the steps of:
- recognising an incipient condensation condition of the LPG, which takes place when the LPG in vapour form starts to pass into liquid form;
- in response to the recognition of the incipient condensation condition of the LPG, detecting first LPG injection pressure and temperature values;
- starting from the first LPG injection pressure and temperature values detected, obtaining a corresponding percentage of propane and/or butane contained in the LPG.

According to the invention, the step of recognising the incipient condensation condition of the LPG comprises the steps of:
- identifying a first series of parameters indicating a possible incipient condensation condition of the LPG;
- identifying a second series of parameters associated with the first series of parameters;
- for each parameter of the second series, defining an observation window for the parameters of the first series, the observation window being delimited upwards and/or downwards by threshold values assumed by the corresponding parameter of the second series;
- detecting values of the parameters of the second series and verifying whether such values are within the corresponding observation windows;
- detecting the values of the parameters of the first series and, in response to the detected values of the parameters of the second series within the corresponding observation windows, checking whether the detected values for the parameters of the first series are compatible with an incipient condensation condition for the LPG.

According to the invention, the first series of parameters comprises the ratio between air and LPG and/or the temperature of the LPG.

According to the invention, the second series of parameters comprises one or more of the following: minimum engine load, engine load variation, engine revolutions, gas temperature, engine cooling liquid temperature, purging condition of a canister, diagnosis condition, switch-over condition, cut-off exit condition.

According to an aspect of the invention, the method further comprises a step of filtering the percentage of propane and/or butane as a function of a previously registered value.

According to an aspect of the invention, the step of detecting the first LPG injection pressure and temperature values takes place at or in proximity to the injectors.

According to an aspect of the invention, the method further comprises a step of detecting second LPG injection pressure and temperature values in response to the recognition of the incipient condensation condition of the LPG.

According to an aspect of the invention, the step of detecting the second LPG injection pressure and temperature values takes place in the second conduit.

According to an aspect of the invention, the step of detecting the second LPG injection pressure and temperature values takes place downstream of the pressure reducer.

According to an aspect of the invention, the step of obtaining a percentage of propane corresponding to the first pressure and temperature values detected is performed on vapour pressure curves related to a plurality of different propane percentages.

According to an aspect of the invention, the step of obtaining a percentage of propane corresponding to the first pressure and temperature values detected is performed by linear interpolation on a table of association of pressure and temperature values corresponding to a plurality of different propane percentages.

According to an aspect of the invention, the steps of detecting values of parameters of the first series and of the second series are totally or at least partially superposed.

The defined technical task and the specified objects are substantially reached by an LPG supply system for engines with positive ignition, comprising:
- a tank containing LPG;
- a first conduit;
- a pressure reducer in fluid communication with the tank through the first conduit, the pressure reducer being configured to vaporise the LPG coming from the tank and therefore for reducing the pressure;
- a second conduit;
- a plurality of injectors in fluid communication with the pressure reducer through the second conduit;
- at least a first pressure sensor and at least a first temperature sensor arranged in proximity to or at the injectors and configured to detect first LPG injection pressure and temperature values, respectively, at the injectors;
- an electronic control unit configured to control the supply of LPG to the injectors,
characterised in that the electronic control unit is configured to: execute the method according to any one of claims 1-7.

According to an aspect of the invention, the LPG supply system further comprises a pressure sensor and a second temperature sensor arranged along the second conduit and configured to detect second LPG injection pressure and temperature values, respectively.

According to an aspect of the invention, the electronic control unit is configured to:
- receive also said second LPG injection pressure and temperature values from the second pressure sensor and from the second temperature sensor in said incipient condensation condition;
- obtain the percentage of propane and/or butane as a function of the second LPG injection pressure and temperature values detected.

According to an aspect of the invention, the electronic control unit is further configured to prevent further condensations of the LPG as a function of the propane percentage estimate.

According to an aspect of the invention, the electronic control unit is further configured to optimise the air/fuel ratio as a response to the estimate of the percentage of propane and/or butane.

In particular, the step of optimising the air/fuel ratio comprises a step of updating adaptive coefficients of the engine control and/or specific coefficients of the LPG injection.

According to an aspect of the invention, the electronic control unit is further configured to update switching parameters for bi-fuel vehicles as a function of the estimated percentage of propane and/or butane. According to an aspect of the invention, the electronic control unit is further configured to update the estimate of the percentage of propane and/or butane at the moment of refuelling.

Further characteristics and advantages of the present invention will become more apparent from the approximate and thus non-limiting description of a preferred, but not exclusive, embodiment of an LPG supply system for engines with positive ignition and a method for estimating the composition of LPG in said system, as illustrated in the accompanying drawings, in which:
- figure 1 illustrates an LPG supply system for petrol engines, in accordance with the prior art;
- figure 2 illustrates an LPG supply system for petrol engines, in accordance with the present invention;
- figure 3 illustrates a flow diagram of a method for estimating the composition of LPG in an LPG supply system for petrol engines, in accordance with the present invention;
- figure 4 illustrates a detailed flow diagram of a step of the method of figure 3.
- figure 5 illustrates vapour pressure curves of the LPG, as the propane percentage varies, for use in the method of figure 3.

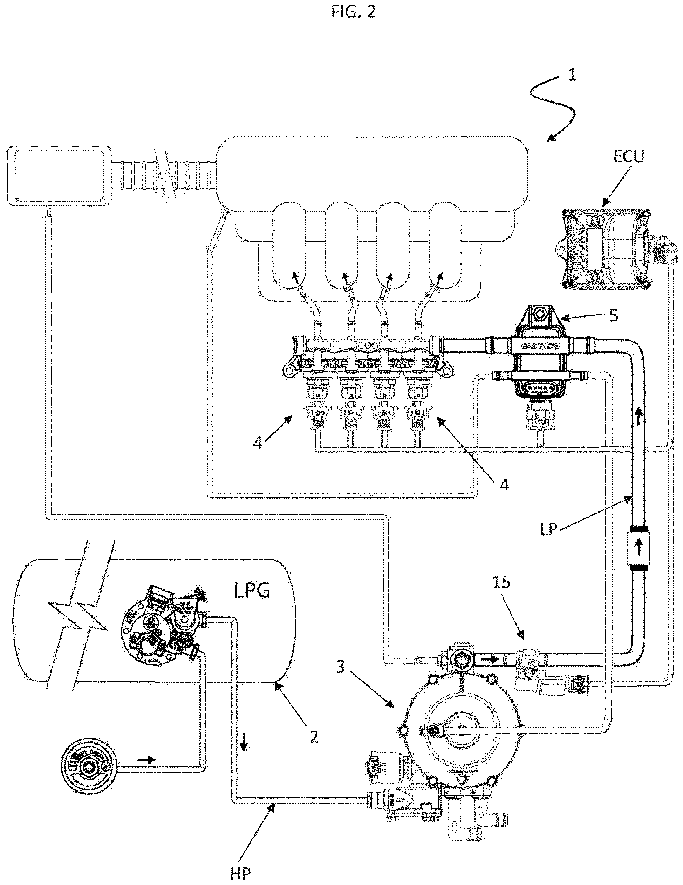

Figure 2 illustrates the diagram of an LPG supply system for engines with positive ignition, hereinafter briefly referred to as "system". The system, indicated with number 1, comprises components of the known type (those already mentioned for the solution of figure 1), which will be indicated below.

The system 1 comprises a tank 2 in which the LPG is stored in a balanced condition between the liquid phase and the gaseous phase, at ambient temperature.

The system 1 further comprises a pressure reducer 3, which is in fluid communication with the tank 2 through a first conduit, also known as the "high pressure line", indicated by HP. The pressure reducer 3 is configured to vaporise the LPG, thus reducing the pressure to operating pressure. The system 1 further comprises a plurality of injectors 4, which form the so-called injection "rail".

The LPG vaporised by the pressure reducer 3 reaches the injectors 4 via a second conduit, also known as "low pressure line", indicated by LP.

A first pressure sensor and a first temperature sensor are installed at or in proximity to the injectors 4. In the embodiment described and illustrated herein, the first pressure sensor and the first temperature sensor are integrated into a single block, indicated by number 5.

In an alternative embodiment, not illustrated, the two sensors are separate.

The system 1 further comprises an electronic control unit ECU configured to control the injection and monitor the signals coming from the sensors and from the other electromechanical/electronic components of the system.

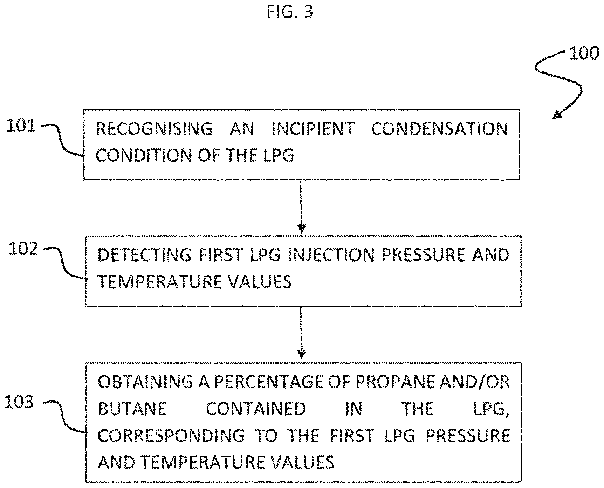

As can be seen better below, the ECU of figure 2 is configured to perform the functions not present in the ECU of the prior art system of figure 1. The method for estimating the composition of LPG in the system 1 is illustrated in figure 3 by a flow diagram.

Such method, indicated as a whole by number 100, first of all comprises a step of recognising an incipient condensation condition of the LPG (block 101).

The incipient condensation condition is defined as the condition in which the vaporised LPG starts to pass into the liquid phase.

In response to the recognition of the incipient condensation condition of the LPG, the method continues with a step of detecting first LPG injection pressure and temperature values (block 102).

Therefore, at block 103, a percentage of propane and/or butane present in the LPG is obtained, which corresponds to the first LPG injection pressure and temperature values detected.

It is known that the condensation of gas leads to a variation in the ratio of the mixture, in particular to the reduction of the air/fuel ratio (rich mixture) and to a drop in its temperature.

Preferably, the recognition of the incipient condensation condition takes place by monitoring a first series of parameters indicating a possible incipient condensation condition of the LPG, such as the air/LPG ratio and the temperature.

However, it is necessary to note that although such indicators can have compatible values with an incipient condensation condition of the LPG, they are not sufficient to identify such condition with certainty.

In fact, a richer ratio of the mixture than the target one and/or a drop in temperature of the LPG can depend on causes other than the incipient condensation.

For this reason, the step of recognising the incipient condensation condition of the LPG comprises monitoring a second series of parameters, associated with the first series of parameters.

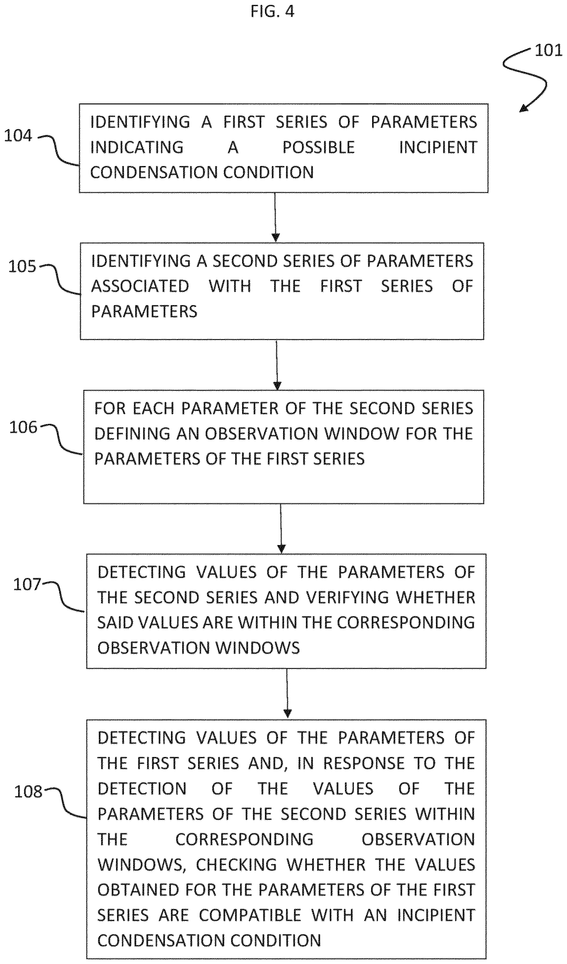

The parameters of the second series are configured to discriminate whether the values assumed by the parameters of the first series are actually an indication of an incipient condensation condition of the LPG. The step of recognising the incipient condensation condition of the LPG (block 101) is illustrated in detail in figure 4.

It starts by identifying a first series of parameters indicating a possible incipient condensation condition of the LPG (block 104). As mentioned above, the parameters of the first series are for example the ratio between air and LPG and/or the temperature of the LPG.

Furthermore, a second series of parameters associated with the first series of parameters is identified (block 105).

For each parameter of the second series an observation window of the parameters of the first series is defined (block 106).

Each observation window is delimited upwards and/or downwards by values assumed by the corresponding parameter of the second series. The steps described in blocks 104, 105 and 106 can be performed at the beginning only once.

The method further provides for a step of detecting values of the parameters of the second series and verifying whether such values are within the corresponding observation windows (block 107).

A step of detecting values of the parameters of the first series is further performed.

In response to the detected values of the parameters of the second series within the corresponding observation windows, a step is performed to check whether the detected parameters of the first series are compatible with an incipient condensation condition for the LPG (block 108).

In other words, when the parameters of the first series indicate the possibility that there is an incipient condensation condition of the LPG but one or more parameters of the second series are outside the corresponding observation window, the condensation is not effectively taking place.

Therefore, in this case, although the values assumed by the parameters of the first series are compatible with an incipient condensation condition, they are due to different causes, therefore it is not necessary to "observe them", i.e. they can be ignored. In other words, the values assumed by the parameters of the first series are not considered as reliable.

Conversely, if the values of one or more parameters of the second series fall within the corresponding observation windows, then it is necessary to consider the parameters of the first series which, if compatible with an incipient condensation condition, indicate that this is effectively taking place.

It must be noted that the parameters of the first series and of the second series are preferably detected simultaneously.

For example, the parameters of the second series are one or more of the following:
- Minimum engine load: the condensation of the LPG occurs if the engine load has a value greater than a predefined threshold. The intake air pressure is therefore monitored through an MAP (Manifold Air Pressure) sensor. The corresponding observation window presents as lower limit a value corresponding to the minimum load for which the condensation of the LPG occurs.
- Engine load variation: the condensation of the LPG occurs under load increase conditions. Therefore, the corresponding observation window is defined so as to exclude any negative variations of the load above a predefined threshold.
- Engine revolutions (RPM, Revolution Per Minute): the condensation of the LPG takes place in the presence of a minimum number of engine revolutions. The corresponding observation window is defined so as to exclude engine revolution values lower than a predefined limit.
- Gas temperature: the corresponding observation window is defined so as to exclude condensation for gas temperature values above a predefined threshold.
- Temperature of the water or in general of the engine cooling liquid: the corresponding observation window is defined so as to exclude condensation for water temperature values above a predefined threshold.
- Canister Purge: the canister is a container that houses activated charcoal for absorbing the excess vapour produced in the tank during petrol operation. Any values of the parameters of the first series compatible with the incipient condensation condition during the canister purge are not necessarily connected with a condensation effectively taking place.
- Lambda probe/catalyst diagnosis: as for the canister purge, also during the steps of engine check diagnosis on a Lambda probe or catalyst, there is no certainty of condensation taking place.
- Switch-Over: because of mixture ratio enrichment strategies adapted to prevent delivery gaps during the switch from petrol to LPG, the corresponding observation window is defined so as not to be active within a predetermined time interval after the switch from petrol to LPG.
- Cut-off exit: enrichment strategies are also provided in the cut-off exit, for which a threshold is established in terms of the number of injections performed at the cut-off exit below which the observation of the parameters of the first series is not performed.

In practice, the indication of the incipient condensation condition can be ignored if the indicators of the second series are outside the corresponding observation windows both because condensation can be considered not very plausible (engine load conditions, engine temperature, etc.) and because the conditions for performing a reliable assessment are not available (e.g. canister purge, Lambda probe diagnosis).

Preferably, the lower and/or upper threshold values of the parameters of the second series can be calibrated.

Once the incipient condensation condition has been recognised, the method provides for detecting the first LPG injection pressure and temperature values (block 102 of figure 3).

Such detection takes place in a low pressure area of the system 1. According to an aspect of the invention, such detection takes place at or in proximity to the injectors 4.

Preferably, such detection is performed by the first pressure sensor and by the first temperature sensor 5.

As mentioned above, such sensors are already provided in the system, therefore it is sufficient to use them also for estimating the composition of the LPG, avoiding the introduction of additional components, as is the case instead in known solutions.

According to an embodiment, the method also provides for a step of detecting second LPG injection pressure and temperature values, still performed after recognising the incipient condensation condition.

Such detection takes place in the second conduit LP.

For example, such detection takes place downstream of the pressure reducer 3.

Preferably, the detection of the second values is performed by a second pressure sensor and by a second temperature sensor.

According to an embodiment described and illustrated herein, the second pressure sensor and the second temperature sensor are integrated into the same block, number 15.

In an alternative embodiment, the two sensors are separate.

By performing the detection in two separate areas of the low pressure line LP by the two pairs of pressure and temperature sensors, the reliability of the estimate of the LPG composition is increased.

Preferably, starting from the first values and, optionally also from the second values, a percentage of propane in the LPG can be estimated. The percentage of butane is estimated indirectly starting from the percentage of propane.

According to an embodiment, the percentage of propane corresponding to the first pressure and temperature values is estimated on vapour pressure curves related to different propane percentages.

In fact, each pair of pressure and temperature values corresponds to a propane concentration value.

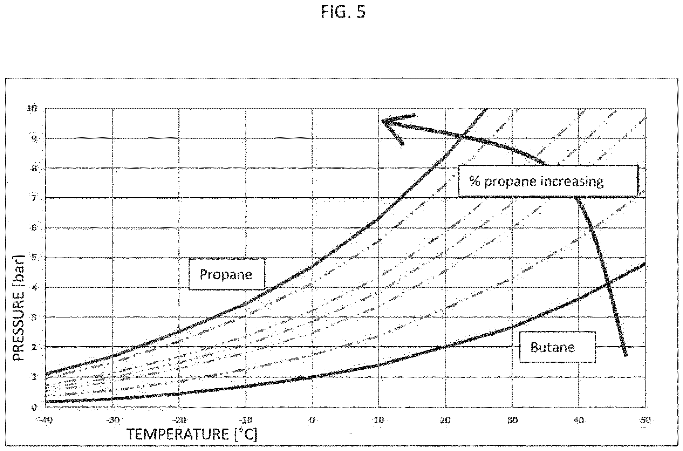

Figure 5 illustrates some vapour pressure curves related to different propane percentages.

According to another embodiment, the search for the propane percentage corresponding to a pair of pressure and temperature values can also take place by linear interpolation on a so-called look-up table rather than on the vapour pressure curves.

In this context, the look-up table used is a table for the association of pressure and temperature values corresponding to different propane percentages.

Both the linear interpolation on the look-up table and the use of vapour pressure curves are only (non-limiting) examples of ways of estimating the propane percentage.

The electronic control unit ECU of the system 1 is therefore configured to:
- recognise an incipient condensation condition of the LPG, for which the LPG in vapour form starts to pass into liquid form;
- in response to the recognition of the incipient condensation condition of the LPG, receive the first LPG injection pressure and temperature values from the first pressure sensor and from the first temperature sensor;
- obtain a percentage of propane and/or butane present in the LPG corresponding to the first LPG injection pressure and temperature values detected.

According to an embodiment, the electronic control unit ECU is also configured to receive the second LPG injection pressure and temperature values from the second pressure sensor and from the second temperature sensor. In that case, the percentage of propane and/or butane present in the LPG corresponding to the first and to the second pressure and temperature values detected is estimated, thus increasing the estimate reliability.

The estimate of the LPG composition provides for various uses, indicated briefly below.

Once the percentage of propane has been estimated, the system 1 settings are updated (e.g. switching delay, cooling liquid temperature threshold, etc.).

The switching delay and the cooling liquid temperature threshold enable the system 1 to power the engine avoiding any malfunctioning due to the inability of the system itself to vaporise the LPG in the different load conditions and environmental conditions (external air temperature).

Each time the engine is started, information (in the form of vectors) on the external temperature and on the temperature of the engine cooling liquid is received, and a minimum cooling liquid temperature for the switch-over and a minimum waiting time are sent back, respectively.

The calibration of the vectors therefore enables a single setting with equivalent environmental conditions, which is used regardless of the characteristics of the fuel, and which is therefore usually set conservatively on the characteristics of a low propane mixture, also in the cases in which propane rich mixtures are actually used which would instead - in equivalent external conditions - enable shorter waiting times and lower cooling liquid temperatures, with clear savings in petrol and reduced CO₂ emissions.

The use of the estimated propane percentage as the input data item for these strategies together with the already mentioned input data, enable different target times and cooling liquid temperatures to be used with equivalent external conditions. The vectors become tables, and the output data item is obtained by crossing the two input data items (% propane and ambient/cooling liquid temperature) by linear interpolation.

By way of example, lower propane percentages correspond to longer waiting times for switching, adapted to prevent the condensation of the LPG at subsequent switching moments, still in compliance with standard constraints.

Furthermore, the adaptive coefficients for managing the injected quantity and for controlling the ratio of the mixture are updated to minimise the effects of the different composition of fuel on the engine control parameters and emissions.

In fact, LPG is a mixture mainly composed of butane and propane, in proportions regulated by legislation, but which are extremely variable. Such variability has an impact on the formation of the air/fuel mixture, due to effects on the density and calorific power of the LPG itself. It is common practice to manage such variability by means of adaptive engine control parameters and/or specific parameters of the gas injection system, through feedback algorithms based on reading the quality of the combustion products (closed loop with Lambda probe).

The original aim of such parameters is to adapt the main fuel controls to the ageing of the sensors and actuators of the supply system and monitor system deviations that can have an impact on the emissions. The monitoring is performed by comparing the values of such adaptive parameters with thresholds.

However, the variability of the composition of the fuel is also usually managed with said adaptive parameters. It is an improper management which, due to the superposition of the ageing effects of the system and fuel variability, can alter the effective recognition of exceeding regulatory limits on emissions.

The propane percentage estimate proposed herein enables specific adaptive coefficients to be updated, implemented in the electronic gas injection control unit, related solely to the quality of the fuel, which are independent of the adaptive coefficients of the prior art, to which the sole compensation of the injection system variations due to natural ageing continues to be attributed.

Upon the recognition of any LPG incipient condensation event, i.e. each update of the propane percentage estimate, the gas injection control unit updates the specific fuel quality parameters. In particular, a multiplicative factor (gain) is generated, which is inserted in the calculation chain for determining the quantity of fuel to inject, optimising the air/fuel ratio as a function of the estimated LPG quality. In this way, the engine control can work in optimal conditions. This leads to a minimisation of the corrections implemented by the feedback engine control, i.e. a minimisation of the number of non-optimised combustion cycles, which can therefore have an impact on the emissions.

Starting from the propane percentage estimate it is also possible to prevent further condensations.

In particular, the estimated propane percentage is used as an input data item together with the LPG temperature for calculating the maximum limit of load that can be delivered in gas mode in terms of LPG pressure. In fact, the limit pressure corresponds to the LPG vapour pressure of a composition of known temperatures.

The system must therefore avoid reaching the condensation limit pressure (for a given propane percentage and a given LPG temperature).

In this regard, a (calibratable) pressure safety margin and a threshold obtained from the difference between the condensation limit and the safety margin are identified. When the LPG pressure reaches the threshold value, the system actuates a safety action (temporary switch to petrol, combination of the two fuels LPG/petrol, SplitFuel). This safety action will last as long as the conditions are close to the limit threshold.

A (calibratable) hysteresis value is used to decide on the exit from the critical stage. When the pressure of the LPG drops below the threshold pressure minus the hysteresis, the system returns to normal operation.

During the safety action step, the LPG pressure can be estimated by monitoring the intake manifold pressure (MAP) and considering the pressure reducer regulation value, in order to prevent reading from the sensor pressure values that are inconsistent with the load due to the total or partial closure of the gas circuit (gas injectors closed).

According to an aspect of the invention, once the percentage of propane and/or butane has been estimated, it is possible to provide for a filtering step, i.e. using calibratable filters to gradually approach the real percentage value through several condensations so as to limit estimation errors.

According to an aspect of the invention, in the case of gas delivery load limitation, it is envisaged to integrate other methods, which are dependent on the technology of the vehicle. By way of non-limiting example, temporary petrol contributions can be made for bi-fuel vehicles.

The updating of the propane percentage estimate upon refuelling is briefly described below.

The propane percentage estimate obtained by the recognition of an incipient condensation of the LPG is stored in the control unit (ECU) and immediately applied in the specific strategies. As such estimate is adapted to prevent further condensations of the LPG, this would lead to the impossibility to recognise a mixture refilled with a higher propane percentage.

Upon refuelling, the propane percentage estimate is updated to a maximum value, defined by a calibration in the control unit software.

For updating such value, it is possible to provide for a filtering step, i.e. using calibratable filters, to approach the maximum possible propane percentage value defined, in relation to the amount of fuel effectively refilled, the residual quantity of fuel and the propane % value previously registered. The characteristics of an LPG supply system for engines with positive ignition and a method for estimating the composition of LPG in said system, according to the present invention, prove to be clear from the description provided as do the advantages thereof.

Unlike known solutions, in which the mixture is estimated by implementing strategies that aim to avoid condensation of the LPG and with sensors in the high pressure circuit, the solution proposed herein is instead based on the recognition of an incipient condensation and on the detection of the LPG injection temperature and pressure in the low pressure circuit.

Such detection is performed using the sensors of the low pressure circuit already supplied with the system, thus avoiding complicating the structure thereof.

By creating appropriate observation windows for the first parameters (indicative of the probability of incipient condensation), it is possible to establish whether the detected values for such parameters are effectively connected with the incipient condensation or not. This is made possible thanks to a second series of parameters necessary to create the observation windows. By increasing the number of parameters of the second series, a more refined and accurate observation of the parameters of the first series is obtained, therefore the recognition of the incipient condensation is made more reliable.

The propane percentage estimate (and therefore also of butane) enables the system settings to be updated by establishing more accurately the moment of switch-over to LPG supply, thus optimising the consumption and reducing CO₂ emissions.

The propane percentage estimate as an input data item for preventing condensation also enables the use of LPG to be maximised and the number of back switches to petrol to be minimised.

Thus the safety, the driveability and the reliability of the system components are improved.

## Claims

1. A method (100) for estimating the composition of LPG in an LPG supply system (1) for engines with positive ignition, said LPG supply system (1) comprising an LPG tank (2), a pressure reducer (3), a first conduit (HP) that extends between the tank (2) and the pressure reducer (3), a plurality of injectors (4) and a second conduit (LP) that extends between the pressure reducer (3) and the injectors (4), said method (100) comprising the steps of:
- recognising an incipient condensation condition of the LPG (101), said incipient condensation condition of the LPG occurring when the LPG in vapour form starts to pass into liquid form;
- in response to the recognition of said incipient condensation condition of the LPG, detecting first LPG injection pressure and temperature values (102);
- starting from the first LPG injection pressure and temperature values detected, obtaining a corresponding percentage of propane and/or butane contained in the LPG (103),
wherein the step of recognising the incipient condensation condition of the LPG (101) comprises the steps of:
- identifying a first series of parameters indicating a possible incipient condensation condition of the LPG (104), wherein the first series of parameters comprises the ratio between air and LPG and/or the temperature of the LPG;
- identifying a second series of parameters associated with said first series of parameters (105), wherein the second series of parameters comprises one or more of the following: minimum engine load, engine load variation, engine revolutions, gas temperature, engine cooling liquid temperature, purging condition of a canister, diagnosis condition, switch-over condition, cut-off exit condition;
- for each parameter of the second series defining an observation window for the parameters of the first series (106), said observation window being delimited upwards and/or downwards by threshold values assumed by said parameter of the second series;
- detecting values of the parameters of the second series and verifying whether said values are within the corresponding observation windows (107);
- detecting values of the parameters of the first series and, in response to the detected values of the parameters of the second series within the corresponding observation windows, checking whether the detected values for the parameters of the first series are compatible with an incipient condensation condition for the LPG (108).

2. The method according to claim 1, wherein said step of detecting the first LPG injection pressure and temperature values (102) takes place at or in proximity to said injectors (4).

3. The method according to any one of the preceding claims, further comprising a step of detecting second LPG injection pressure and temperature values in response to the recognition of said incipient condensation condition of the LPG.

4. The method according to claim 3, wherein said step of detecting the second LPG injection pressure and temperature values takes place in the second conduit (LP) or downstream of the pressure reducer (3).

5. The method according to any one of the preceding claims, wherein the step of obtaining a percentage of propane corresponding to the first pressure and temperature values detected (103) is performed on vapour pressure curves related to a plurality of different propane percentages.

6. The method according to any one of claims 1 to 4, wherein the step of obtaining a percentage of propane corresponding to the first pressure and temperature values detected (103) is performed by linear interpolation on a table of association of pressure and temperature values corresponding to a plurality of different propane percentages.

7. The method according to any one of claims 1 to 6, wherein the steps of detecting values of parameters of the first series and of the second series are totally or at least partially superposed.

8. An LPG supply system (1) for engines with positive ignition, comprising:
a tank (2) containing LPG;
a first conduit (HP);
a pressure reducer (3) in fluid communication with said tank (2) through the first conduit (HP), said pressure reducer (3) being configured to vaporise the LPG coming from the tank (2) and therefore for reducing the pressure;
a second conduit (LP);
a plurality of injectors (4) in fluid communication with said pressure reducer (3) through the second conduit (LP);
at least a first pressure sensor and at least a first temperature sensor (5) arranged in proximity to or at said injectors (4) and configured to detect first LPG injection pressure and temperature values, respectively, at said injectors (4);
an electronic control unit (ECU) configured to control the supply of LPG to said injectors (4),
**characterised in that** the electronic control unit (ECU) is configured to execute the method according to any one of the preceding claims.

9. The LPG supply system (1) according to claim 8, further comprising a second pressure sensor and a second temperature sensor (15) arranged along said second conduit (LP) and configured to detect second LPG pressure and temperature values, respectively, said electronic control unit (ECU) being configured to:
- receive also said second LPG injection pressure and temperature values from the second pressure sensor and from the second temperature sensor (15) in said incipient condensation condition;
- obtain the percentage of propane and/or butane as a function of the second LPG injection pressure and temperature values detected.

10. The LPG supply system (1) according to claim 8 or 9, wherein said electronic control unit (ECU) is further configured to prevent any further condensations of LPG as a function of the estimate of the propane percentage.

11. The LPG supply system (1) according to any one of claims 8 to 10, wherein said electronic control unit (ECU) is further configured to optimise the air/fuel ratio as a response to the estimate of the percentage of propane and/or butane.

12. The LPG supply system (1) according to claim 11, wherein said step of optimising the air/fuel ratio comprises a step of updating adaptive coefficients of the engine control and/or specific coefficients of the LPG injection.

13. A software product that can be loaded into the memory of a computer or a control unit, said software product comprising instructions which, when run by the computer or control unit, determine the execution of the steps of the method according to any one of claims 1 to 7.

## Patentansprüche

1. Verfahren (100) zur Schätzung der LPG-Zusammensetzung in einem LPG-Versorgungssystem (1) für Motoren mit Fremdzündung, wobei das LPG-Versorgungssystem (1) einen LPG-Tank (2), einen Druckminderer (3), eine erste Leitung (HP), die sich zwischen dem Tank (2) und dem Druckminderer (3) erstreckt, eine Vielzahl von Injektoren (4) und eine zweite Leitung (LP) umfasst, die sich zwischen dem Druckminderer (3) und den Injektoren (4) erstreckt, wobei das Verfahren (100) die folgenden Schritte umfasst:
- Erkennen eines beginnenden Verflüssigungszustands des LPG (101), wobei der beginnende Verflüssigungszustand des LPG eintritt, wenn das LPG in Dampfform beginnt, in die flüssige Form überzugehen;
- als Reaktion auf das Erkennen der beginnenden Verflüssigungszustands des LPG, Erfassen erster LPG-Injektionsdruck- und -Temperaturwerte (102);
- ausgehend von den erfassten ersten LPG-Injektionsdruck- und den - Temperaturwerten, Ermitteln eines entsprechenden Anteils von Propan und/oder Butan, das im LPG enthalten ist (103),
wobei der Schritt zum Erkennen des beginnenden Verflüssigungszustands des LPG (101) die folgenden Schritte umfasst:
- Identifizieren einer ersten Reihe von Parametern, die Aufschluss über einen möglichen beginnenden Verflüssigungszustand des LPG geben (104), wobei die erste Reihe von Parametern das Verhältnis zwischen Luft und LPG und/oder der Temperatur des LPG umfasst;
- Identifizieren einer zweiten Reihe von Parametern, die mit der ersten Reihe von Parametern assoziiert sind (105), wobei die zweite Reihe von Parametern einen oder mehrere der folgenden Parameter umfasst: Mindestmotorlast, Motorlastveränderung, Motordrehzahl, Gastemperatur, Motorkühlflüssigkeitstemperatur, Spülungszustand eines Kanisters, Diagnosezustand, Übergangszustand, Abschaltungsbeendigungszustand;
- für einen jeden Parameter der zweiten Reihe Definieren eines Beobachtungsfensters für die Parameter der ersten Reihe (106), wobei das Beobachtungsfenster nach oben und/oder nach unten durch Schwellenwerte begrenzt ist, die von einem jeden Parameter der zweiten Reihe eingenommen werden;
- Erfassen von Werten der Parameter der zweiten Reihe und Prüfen, ob diese Werte innerhalb der entsprechenden Beobachtungsfenster liegen (107);
- Erfassen von Werten der Parameter der ersten Reihe und als Reaktion auf die erfassten Werte der Parameter der zweiten Reihe innerhalb der entsprechenden Beobachtungsfenster Prüfen, ob die erfassten Werte für die Parameter der ersten Reihe mit einem beginnenden Verflüssigungszustand für das LPG kompatibel sind (108).

2. Verfahren nach Anspruch 1, wobei der Schritt zum Erfassen der ersten LPG-Injektionsdruck- und -Temperaturwerte (102) an den oder in der Nähe der Injektoren (4) stattfindet.

3. Verfahren nach einem der vorhergehenden Ansprüche, zudem umfassend einen Schritt zum Erfassen zweiter LPG-Injektionsdruck- und - Temperaturwerte als Reaktion auf das Erkennen des beginnenden Verflüssigungszustands des LPG.

4. Verfahren nach Anspruch 3, wobei der Schritt zum Erfassen der zweiten LPG-Injektionsdruck- und -Temperaturwerte im der zweiten Leitung (LP) oder stromabwärts des Druckminderers (3) stattfindet.

5. Verfahren nach einem der vorhergehenden Ansprüche, wobei der Schritt zum Ermitteln eines Anteils von Propan entsprechend den ersten erfassten Druck- und Temperaturwerten (103) auf Dampfdruckkurven durchgeführt wird, die sich auf eine Vielzahl von verschiedenen Propananteilen beziehen.

6. Verfahren nach einem der Ansprüche 1 bis 4, wobei der Schritt zum Ermitteln eines Anteils von Propan entsprechend den ersten erfassten Druck- und Temperaturwerten (103) durch lineare Interpolation auf einer Verknüpfungstabelle von Dampf- und Temperaturwerten, die einer Vielzahl von verschiedenen Propananteilen entsprechen, durchgeführt wird.

7. Verfahren nach einem der Ansprüche 1 bis 6, wobei die Schritte zum Erfassen von Werten von Parametern der ersten Reihe und der zweiten Reihe völlig oder teilweise überlagert sind.

8. LPG-Versorgungssystem (1) für Motoren mit Fremdzündung, umfassend:
einen Tank (2), der LPG enthält;
eine erste Leitung (HP);
einen Druckminderer (3) in Fluidkommunikation mit dem Tank (2) durch die erste Leitung (HP), wobei der Druckminderer (3) ausgelegt ist, um das aus dem Tank (2) strömende LPG zu verdampfen und dadurch den Druck zu reduzieren;
eine zweite Leitung (LP);
eine Vielzahl von Injektoren (4) in Fluidkommunikation mit dem Druckminderer (3) durch die zweite Leitung (LP);
mindestens einen ersten Drucksensor und mindestens einen ersten Temperatursensor (5), die in der Nähe der oder an den Injektoren (4) angeordnet und ausgelegt sind, um jeweils erste LPG-Injektionsdruck- und -Temperaturwerte an den Injektoren (4) zu erfassen;
eine elektronische Steuereinheit (ECU), die ausgelegt ist, um die LPG-Versorgung zu den Injektoren (4) zu steuern,
**dadurch gekennzeichnet, dass** die elektronische Steuereinheit (ECU) ausgelegt ist, um das Verfahren nach einem der vorhergehenden Ansprüche auszuführen.

9. LPG-Versorgungssystem (1) nach Anspruch 8, zudem umfassend einen zweiten Drucksensor und einen zweiten Temperatursensor (15), die entlang der zweiten Leitung (LP) angeordnet und ausgelegt sind, um jeweils zweite LPG-Druck- und -Temperaturwerte zu erfassen, wobei die elektronische Steuereinheit (ECU) ausgelegt ist, um:
- auch die zweiten LPG-Injektionsdruck- und -Temperaturwerte vom zweiten Drucksensor und vom zweiten Temperatursensor (15) im beginnenden Verflüssigungszustand zu empfangen;
- den Anteil von Propan und/oder Butan als eine Funktion der zweiten erfassten LPG-Injektionsdruck- und Temperaturwerte zu ermitteln.

10. LPG-Versorgungssystem (1) nach Anspruch 8 oder 9, wobei die elektronische Steuereinheit (ECU) zudem ausgelegt ist, um alle weiteren LPG-Verflüssigungen als eine Funktion der Schätzung des Propananateils zu vermeiden.

11. LPG-Versorgungssystem (1) nach einem der Ansprüche 8 bis 10, wobei die elektronische Steuereinheit (ECU) zudem ausgelegt ist, um das Luft-Brennstoff-Verhältnis als Reaktion auf die Schätzung des Anteils von Propan und/oder Butan zu optimieren.

12. LPG-Versorgungssystem (1) nach Anspruch 11, wobei der Schritt zum Optimieren des Luft-Brennstoff-Verhältnisses einen Schritt zum Aktualisieren adaptiver Koeffizienten der Motorsteuerung und/oder spezifischer Koeffizienten der LPG-Injektion umfasst.

13. Softwareprodukt, das in den Speicher eines Computers oder einer Steuereinheit geladen werden kann, wobei das Softwareprodukt Anweisungen umfasst, die, wenn sie vom Computer oder der Steuereinheit ausgeführt werden, die Durchführung der Schritte des Verfahrens nach einem der Ansprüche 1 bis 7 bewirken.

## Revendications

1. Procédé (100) d'estimation de la composition de GPL dans un système d'alimentation en GPL (1) pour moteurs à allumage commandé, ledit système d'alimentation en GPL (1) comprenant un réservoir de GPL (2), un réducteur de pression (3), un premier conduit (HP) qui s'étend entre le réservoir (2) et le réducteur de pression (3), une pluralité d'injecteurs (4) et un second conduit (LP) qui s'étend entre le réducteur de pression (3) et les injecteurs (4), ledit procédé (100) comprenant les étapes consistant à:
- reconnaître un état de condensation naissante du GPL (101), ledit état de condensation naissante du GPL se produisant lorsque le GPL à l'état de vapeur commence à passer à l'état liquide ;
- en réponse à la reconnaissance dudit état de condensation naissante du GPL, détecter les premières valeurs de pression et de température d'injection de GPL (102) ;
- à partir des premières valeurs de pression et de température d'injection de GPL détectées, obtenir un pourcentage correspondant de propane et/ou de butane contenu dans le GPL (103),
dans lequel l'étape consistant à reconnaître l'état de condensation naissante du GPL (101) comprend les étapes consistant à :
- identifier une première série de paramètres indiquant un éventuel état de condensation naissante du GPL (104), dans laquelle la première série de paramètres comprend le rapport entre l'air et le GPL et/ou la température du GPL ;
- identifier une deuxième série de paramètres associés à ladite première série de paramètres (105), dans laquelle la deuxième série de paramètres comprend un ou plusieurs des paramètres suivants : charge minimale du moteur, variation de la charge du moteur, révolutions du moteur, température du gaz, température du liquide de refroidissement du moteur, état de purge d'une cartouche, état de diagnostic, état de commutation, état de coupure de sortie ;
- pour chaque paramètre de la deuxième série définissant une fenêtre d'observation pour les paramètres de la première série (106), ladite fenêtre d'observation étant délimitée vers le haut et/ou vers le bas par des valeurs de seuil prises par ledit paramètre de la deuxième série ;
- détecter les valeurs des paramètres de la deuxième série et vérifier si ces valeurs sont comprises dans les fenêtres d'observation correspondantes (107) ;
- détecter les valeurs des paramètres de la première série et, en réponse aux valeurs détectées des paramètres de la deuxième série dans les fenêtres d'observation correspondantes, vérifier si les valeurs détectées pour les paramètres de la première série sont compatibles avec un état de condensation naissante pour le GPL (108).

2. Procédé selon la revendication 1, dans lequel ladite étape consistant à détecter des premières valeurs de pression et de température d'injection de GPL (102) a lieu au niveau ou à proximité desdits injecteurs (4).

3. Procédé selon l'une quelconque des revendications précédentes, comprenant en outre une étape consistant à détecter des secondes valeurs de pression et de température d'injection de GPL en réponse à la reconnaissance dudit état de condensation naissante du GPL.

4. Procédé selon la revendication 3, dans lequel ladite étape consistant à détecter des secondes valeurs de pression et de température d'injection de GPL a lieu dans le second conduit (LP) ou en aval du réducteur de pression (3).

5. Procédé selon l'une quelconque des revendications précédentes, dans lequel l'étape consistant à obtenir un pourcentage de propane correspondant aux premières valeurs de pression et de température détectées (103) est effectuée sur des courbes de pression de vapeur relatives à une pluralité de pourcentages de propane différents.

6. Procédé selon l'une quelconque des revendications 1 à 4, dans lequel l'étape consistant à obtenir un pourcentage de propane correspondant aux premières valeurs de pression et de température détectées (103) est effectuée par interpolation linéaire sur une table d'association de valeurs de pression et de température correspondant à une pluralité de pourcentages de propane différents.

7. Procédé selon l'une quelconque des revendications 1 à 6, dans lequel les étapes consistant à détecter des valeurs de paramètres de la première série et de la seconde série sont totalement ou au moins partiellement superposées.

8. Système d'alimentation en GPL (1) pour moteurs à allumage commandé, comprenant :
un réservoir (2) contenant du GPL ;
un premier conduit (HP) ;
un réducteur de pression (3) en communication fluidique avec ledit réservoir (2) à travers le premier conduit (HP), ledit réducteur de pression (3) étant configuré pour vaporiser le GPL provenant du réservoir (2) et donc pour réduire la pression ;
un second conduit (LP) ;
une pluralité d'injecteurs (4) en communication fluidique avec ledit réducteur de pression (3) à travers le second conduit (LP) ;
au moins un premier capteur de pression et au moins un premier capteur de température (5) disposés à proximité ou au niveau desdits injecteurs (4) et configurés pour détecter les premières valeurs de pression et de température d'injection de GPL, respectivement, au niveau desdits injecteurs (4) ;
une unité de commande électronique (ECU) configurée pour commander l'alimentation en GPL desdits injecteurs (4),
**caractérisé en ce que** l'unité de commande électronique (ECU) est configurée pour exécuter le procédé selon l'une quelconque des revendications précédentes.

9. Système d'alimentation en GPL (1) selon la revendication 8, comprenant en outre un second capteur de pression et un second capteur de température (15) agencés le long dudit second conduit (LP) et configurés pour détecter des secondes valeurs de pression et de température de GPL, respectivement, ladite unité de commande électronique (ECU) étant configurée pour :
- recevoir également lesdites secondes valeurs de pression et de température d'injection de GPL du second capteur de pression et du second capteur de température (15) dans ledit état de condensation naissante ;
- obtenir le pourcentage de propane et/ou de butane en fonction des secondes valeurs de pression et de température d'injection de GPL détectées.

10. Système d'alimentation en GPL (1) selon la revendication 8 ou 9, dans lequel ladite unité de commande électronique (ECU) est en outre configurée pour empêcher d'ultérieures condensations de GPL en fonction de l'estimation du pourcentage de propane.

11. Système d'alimentation en GPL (1) selon l'une quelconque des revendications 8 à 10, dans lequel ladite unité de commande électronique (ECU) est en outre configurée pour optimiser le rapport air/carburant en réponse à l'estimation du pourcentage de propane et/ou de butane.

12. Système d'alimentation en GPL (1) selon la revendication 11, dans lequel ladite étape consistant à optimiser le rapport air/carburant comprend une étape consistant à mettre à jour des coefficients adaptatifs de la commande du moteur et/ou des coefficients spécifiques de l'injection de GPL.

13. Produit logiciel qui peut être chargé dans la mémoire d'un ordinateur ou d'une unité de commande, ledit produit logiciel comprenant des instructions qui, lorsqu'elles sont exécutées par l'ordinateur ou l'unité de commande, déterminent l'exécution des étapes du procédé selon l'une quelconque des revendications 1 à 7.
